# EUROPEAN PATENT APPLICATION

(11) **EP 4 579 661 A1**
(43) Date of publication of application: **02.07.2025**
(21) Application number: 24759460.9
(22) Date of filing: 19.01.2024
(51) Int. Cl.: G11B 27/10

(54) **AUDIO PLAYING SYSTEM AND METHOD AND ELECTRONIC DEVICE**

(30) Priority: 22.02.2023 CN 202310197537
(71) Applicant: Huawei Technologies Co., Ltd., Shenzhen, Guangdong 518129 (CN)
(72) Inventor: WU, Haobo, Shenzhen, Guangdong 518129 (CN); LI, Gang, Shenzhen, Guangdong 518129 (CN); DAI, Zhicheng, Shenzhen, Guangdong 518129 (CN); DING, Hao, Shenzhen, Guangdong 518129 (CN)
(74) Representative: Grünecker Patent- und Rechtsanwälte PartG mbB
(86) International application number: PCT/CN2024/073205
(87) International publication number: WO 2024/174782

(57) **Abstract**

Embodiments of the present invention provide an audio playing system and method, and an electronic device. In the technical solutions, a first electronic device generates a first playing request by using a first application in response to a playing operation performed by a user in the first application on a first audio, where the first playing request carries first audio data of the first audio and a device identifier of a second electronic device; writes the first audio data into a unique buffer address based on the first playing request by invoking a first audio framework; and reads the first audio data from the unique buffer address, and sends the first audio data to the second electronic device, where the unique buffer address is a unique address buffered in a process of transmitting the first audio data from the first application to the second electronic device. The second electronic device outputs the first audio data to a second output device of the second electronic device through a second fast channel and an inter-kernel synchronization mechanism, to play the first audio. This can reduce a delay of distributed audio playing, thereby improving features such as audio-to-video synchronization and echo cancellation, and improving user experience.

## Description

This application claims priority to Chinese Patent Application No. 202310197537.0, filed with the China National Intellectual Property Administration on February 22, 2023 and entitled "AUDIO PLAYING SYSTEM AND METHOD, AND ELECTRONIC DEVICE", which is incorporated herein by reference in its entirety.

### TECHNICAL FIELD

The present invention relates to the field of computer technologies, and in particular, to an audio playing system and method, and an electronic device.

### BACKGROUND

There are a plurality of data buffers in an audio playing system, especially in a distributed audio playing scenario. Although a frame of audio data is not too large, the plurality of buffers still cause a delay, affecting features like audio-to-video synchronization and echo cancellation and user experience.

### SUMMARY

In view of this, embodiments of the present invention provide an audio playing system and method, and an electronic device, which can reduce a delay of distributed audio playing, thereby improving features such as audio-to-video synchronization and echo cancellation, and improving user experience.

According to a first aspect, an embodiment of the present invention provides an audio playing system, including:
a first electronic device, configured to: generate a first playing request by using a first application in response to a playing operation performed by a user in the first application on a first audio, where the first playing request carries first audio data of the first audio and a device identifier of a second electronic device; write the first audio data into a unique buffer address based on the first playing request by invoking a first audio framework; and read the first audio data from the unique buffer address, and send the first audio data to the second electronic device, where the unique buffer address is a unique address buffered in a process of transmitting the first audio data from the first application to the second electronic device; and
the second electronic device, configured to output the first audio data to a second output device of the second electronic device through a second fast channel and an inter-kernel synchronization mechanism, to play the first audio. In embodiments of the present invention, the first electronic device sets, in the first electronic device, the unique buffer address used to buffer the first audio data. Therefore, in a process of transmitting the first audio data, the first audio data needs to be buffered in the first electronic device only once, thereby reducing a redundant buffer and reducing a delay of distributed audio playing, improving features such as audio-to-video synchronization and echo cancellation, and improving user experience.

With reference to the first aspect, in some implementations of the first aspect, the first electronic device is further configured to: generate a second playing request in response to a playing operation performed by the user in the first application on a second audio, where the second playing request carries second audio data of the second audio and a device identifier of the first electronic device; and output the second audio data to a first output device of the first electronic device through a first fast channel and the inter-kernel synchronization mechanism, to play the second audio. In embodiments of the present invention, the first fast channel is created by a first local hardware abstraction layer of the first electronic device. In embodiments of the present invention, through vertical integration of software and hardware, a memory queue created by a local HAL may be directly shared with an audio DSP, to reduce memory copy in the local HAL and the audio DSP, thereby providing a direct fast channel from an application or an audio framework to the bottom-layer audio DSP, reducing memory copy in the audio framework and the bottom-layer audio DSP, and reducing a playing delay of a local audio and a distributed audio.

With reference to the first aspect, in some implementations of the first aspect, the inter-kernel synchronization mechanism includes a time sequence-based synchronization mechanism. In the fast channel, a same memory queue, namely, a producer-consumer model, is used in the local HAL and the DSP. Therefore, the two kernels need to be synchronized. The time sequence-based synchronization mechanism is used, which is simpler and more efficient.

With reference to the first aspect, in some implementations of the first aspect, the unique buffer address is located at the first audio framework or a first distributed hardware abstraction layer of the first electronic device. In embodiments of the present invention, the unique buffer address may be provided by the audio framework or the distributed hardware abstraction layer.

With reference to the first aspect, in some implementations of the first aspect, the first application includes an audio application.

According to a second aspect, an embodiment of the present invention provides an audio playing method, applied to a first electronic device, where the method includes:
generating a first playing request by using a first application in response to a playing operation performed by a user in the first application on a first audio, where the first playing request carries first audio data of the first audio and a device identifier of a second electronic device;
writing the first audio data into a unique buffer address based on the first playing request by invoking a first audio framework; and
reading the first audio data from the unique buffer address, and sending the first audio data to the second electronic device, for the second electronic device to play the first audio, where
the unique buffer address is a unique address buffered in a process of transmitting the first audio data from the first application to the second electronic device. In embodiments of the present invention, the first electronic device sets, in the first electronic device, the unique buffer address used to buffer the first audio data. Therefore, in a process of transmitting the first audio data, the first audio data needs to be buffered in the first electronic device only once, thereby reducing a redundant buffer and reducing a delay of distributed audio playing, improving features such as audio-to-video synchronization and echo cancellation, and improving user experience.

With reference to the second aspect, in some implementations of the first aspect, before the sending the first audio data to the second electronic device, the method further includes:
encoding the first audio data, to obtain encoded first audio data; and
the sending the first audio data to the second electronic device includes:
   sending the encoded first audio data to the second electronic device.

With reference to the second aspect, in some implementations of the first aspect, the method further includes:
generating a second playing request in response to a playing operation performed by the user in the first application on a second audio, where the second playing request carries second audio data of the second audio and a device identifier of the first electronic device; and
outputting the second audio data to a first output device of the first electronic device through a first fast channel and an inter-kernel synchronization mechanism, to play the second audio. In embodiments of the present invention, the first fast channel is created by a first local hardware abstraction layer of the first electronic device. In embodiments of the present invention, through vertical integration of software and hardware, a memory queue created by a local HAL may be directly shared with an audio DSP, to reduce memory copy in the local HAL and the audio DSP, thereby providing a direct fast channel from an application or an audio framework to the bottom-layer audio DSP, reducing memory copy in the audio framework and the bottom-layer audio DSP, and reducing a playing delay of a local audio and a distributed audio.

With reference to the second aspect, in some implementations of the first aspect, the first output device includes a loudspeaker.

With reference to the second aspect, in some implementations of the first aspect, the inter-kernel synchronization mechanism includes a time sequence-based synchronization mechanism. In the fast channel, a same memory queue, namely, a producer-consumer model, is used in the local HAL and the DSP. Therefore, the two kernels need to be synchronized. The time sequence-based synchronization mechanism is used, which is simpler and more efficient.

With reference to the second aspect, in some implementations of the first aspect, the unique buffer address is located at the first audio framework or a first distributed hardware abstraction layer of the first electronic device. In embodiments of the present invention, the unique buffer address may be provided by the audio framework or the distributed hardware abstraction layer.

With reference to the second aspect, in some implementations of the first aspect, the first application includes an audio application.

According to a third aspect, an embodiment of the present invention provides an audio playing method, applied to a second electronic device, where the method includes:
receiving first audio data sent by a first electronic device; and
outputting the first audio data to a second output device of the second electronic device through a second fast channel and an inter-kernel synchronization mechanism, to play a first audio. In embodiments of the present invention, the second fast channel is created by a second local hardware abstraction layer of the second electronic device. In embodiments of the present invention, through vertical integration of software and hardware, a memory queue created by a local HAL may be directly shared with an audio DSP, to reduce memory copy in the local HAL and the audio DSP, thereby providing a direct fast channel from an application or an audio framework to the bottom-layer audio DSP, reducing memory copy in the audio framework and the bottom-layer audio DSP, and reducing a playing delay of a local audio and a distributed audio.

With reference to the third aspect, in some implementations of the first aspect, the receiving audio data sent by the first electronic device includes:
receiving encoded first audio data sent by the first electronic device; and
decoding the encoded first audio data, to obtain the first audio data.

With reference to the third aspect, in some implementations of the first aspect, the inter-kernel synchronization mechanism includes a time sequence-based synchronization mechanism. In the fast channel, a same memory queue, namely, a producer-consumer model, is used in the local HAL and the DSP. Therefore, the two kernels need to be synchronized. The time sequence-based synchronization mechanism is used, which is simpler and more efficient.

With reference to the third aspect, in some implementations of the first aspect, the second output device includes a loudspeaker.

According to a fourth aspect, an embodiment of the present invention provides an electronic device, including a processor and a memory. The memory is configured to store a computer program, the computer program includes program instructions, and when the processor runs the program instructions, the electronic device is enabled to perform the steps of the foregoing method.

According to a fifth aspect, an embodiment of the present invention provides a computer-readable storage medium. The computer-readable storage medium stores a computer program, the computer program includes program instructions, and when the program instructions are run by a computer, the computer is enabled to perform the foregoing method.

According to a sixth aspect, an embodiment of the present invention provides a computer program product. The computer program product includes instructions, and when the computer program product runs on a computer or any at least one processor, the computer is enabled to perform functions/steps in the foregoing method.

### BRIEF DESCRIPTION OF DRAWINGS

FIG. 1 is a diagram of a structure of an electronic device according to an embodiment of the present invention;
FIG. 2 is a block diagram of a software structure of an electronic device 100 according to an embodiment of the present invention;
FIG. 3 is a diagram of an audio playing process in a distributed audio playing scenario;
FIG. 4 is a diagram of an audio playing system;
FIG. 5 is a diagram of a plurality of audio data buffers in a distributed audio playing scenario;
FIG. 6 is a diagram of an audio playing system according to an embodiment of the present invention;
FIG. 7 is a diagram of a principle of a fast-channel apparatus according to an embodiment of the present invention;
FIG. 8 is a diagram of a time sequence of a time sequence-based synchronization mechanism according to an embodiment of the present invention;
FIG. 9 is a diagram of another audio playing system according to an embodiment of the present invention;
FIG. 10 is a diagram of signaling interaction of an audio playing method according to an embodiment of the present invention;
FIG. 11 is a diagram of signaling interaction of another audio playing method according to an embodiment of the present invention;
FIG. 12 is a flowchart of an audio playing method according to an embodiment of the present invention;
FIG. 13 is a specific flowchart of reading first audio data from a unique buffer address by a first electronic device based on a first playing request in FIG. 12;
FIG. 14 is a specific flowchart of outputting, by a first electronic device, second audio data to a first output device of the first electronic device based on a second playing request through a first fast channel and an inter-kernel synchronization mechanism, to play a second audio in FIG. 12;
FIG. 15 is a diagram of a structure of a first electronic device according to an embodiment of the present invention; and
FIG. 16 is a diagram of a structure of a second electronic device according to an embodiment of the present invention.

### DESCRIPTION OF EMBODIMENTS

To make the technical solutions in the present invention more comprehensible, the following describes embodiments of the present invention in detail with reference to the accompanying drawings.

It should be clear that described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "the" and "this" of singular forms used in embodiments and the appended claims of the present invention are also intended to include plural forms, unless otherwise specified in the context clearly.

It should be understood that the term "and/or" used in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

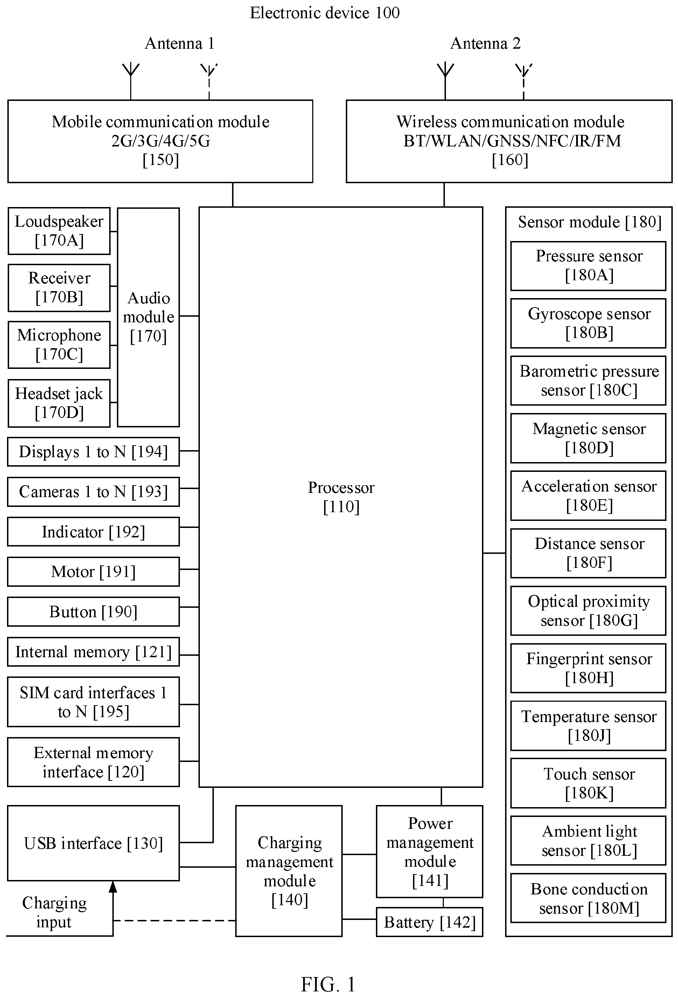

FIG. 1 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device, for example, an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the loudspeaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected to a photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, a file like music and a video is stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the loudspeaker 170A, the receiver 170B, the microphone 170C, the headset jack 170D, and the application processor, for example, music playing and recording.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The loudspeaker 170A, also referred to as a "speaker", is configured to convert an audio electrical signal into a sound signal. The electronic device 100 may be used to listen to music or answer a call in a hands-free mode over the loudspeaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be further configured to provide an incoming call vibration prompt and a touch vibration feedback. For example, touch operations performed on different applications (for example, photographing and audio playing) may correspond to different vibration feedback effects. The motor 191 may further provide different corresponding vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is further compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of the present invention, an Android system of a layered architecture is used as an example to illustrate the software structure of the electronic device 100.

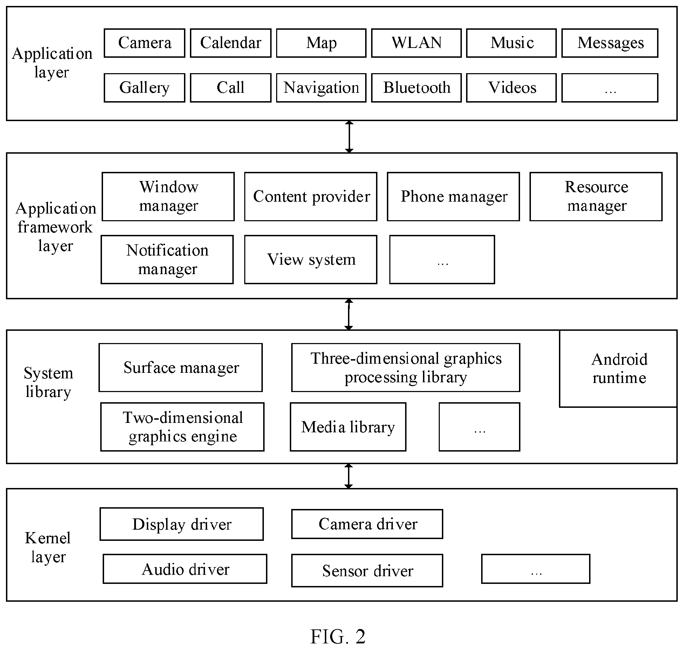

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, an application package may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to: notify download completion and give a message notification. The notification manager may alternatively be a notification that appears in a top status bar of the system in a form of a graph or a scroll bar text, for example, a notification of an application that is run in a background, or may be a notification that appears on a screen in a form of a dialog window. For example, text information is displayed in the status bar, an alert tone is made, the electronic device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a capturing and photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a tapping operation, and a control corresponding to the tapping operation is a control of an icon of a camera application is used. The camera application invokes an interface of the application framework layer to start the camera application, then enables the camera driver by invoking the kernel layer, to capture a static image or a video through the camera 193.

Audio playing is one of important functions of an operating system of a current electronic device. A human ear is sensitive to a sound. Therefore, to ensure that frame freezing is reduced during audio playing, a current mainstream operating system buffers several frames in an audio framework during audio playing. Some operating systems are designed to provide an operating system (Operating System, OS) capability for a single-node device, but are not designed for a distributed scenario. Therefore, directly modifying the operating system for performing distributed audio playing may cause a long delay.

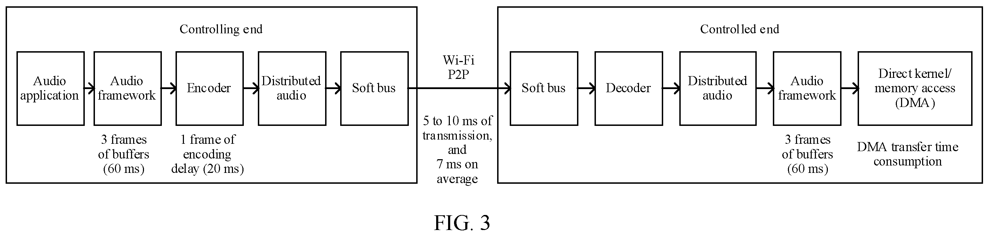

FIG. 3 is a diagram of an audio playing process in a distributed audio playing scenario. As shown in FIG. 3, in the distributed audio playing scenario, an audio needs to be transmitted from an audio application of a controlling end to a loudspeaker of a controlled end for playing. An entire transmission chain is long, and successively includes the audio application, an audio framework, an encoder, a distributed audio, and a soft bus that are of the controlling end, and a decoder, a distributed audio, an audio framework, a kernel/direct memory access (Direct Memory Access, DMA), and the loudspeaker that are of the controlled end. In addition, because there are buffers as well as an encoding delay and DMA transfer time consumption in the audio frameworks and a distributed transmission process of the two devices, an overall delay of distributed audio playing is high, affecting user experience and features such as audio-to-video synchronization and echo cancellation.

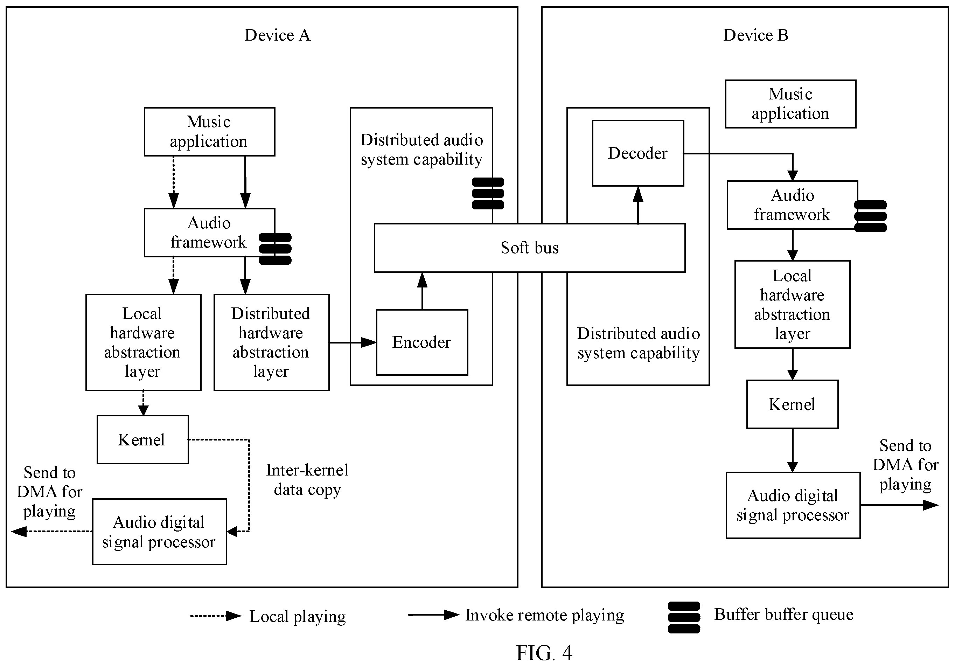

FIG. 4 is a diagram of an audio playing system. As shown in FIG. 4, a music application of a device A is used as an example. When the music application of the device A applies for playing locally, audio data in the device A is transmitted to an audio framework (Audio Framework) by using the music application. Then, the audio data is copied and transmitted by using the audio framework to a local hardware abstraction layer (Local HAL) provided by a local audio. Then, the audio data is transmitted by using the local hardware abstraction layer to a kernel, an audio digital signal processor (DSP), and the like for playing through DMA.

As shown in FIG. 4, the music application of the device A is used as an example. When the music application of the device A applies for playing on a device B, the device A is a controlling end, and the device B is a controlled end. In the device A, the audio data is transmitted to the audio framework by using the music application. Then the audio data is copied and transmitted by using the audio framework to the distributed hardware abstraction layer (Distributed HAL) provided by the distributed audio. Then, the audio data is transmitted by using the distributed hardware abstraction layer to a distributed audio system ability (SA) through data copy, is encoded by using the distributed audio SA, and sent to the device B through a distributed soft bus. After receiving the audio data, the device B decodes the data, and then invokes an audio framework for playing music, where the audio framework invokes a local HAL of the device B, and then transmits the audio data to a kernel and an audio DSP for playing through DMA.

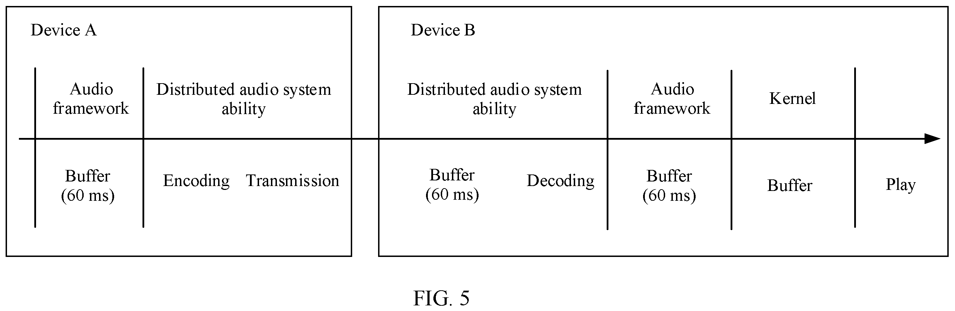

Therefore, in the audio playing system shown in FIG. 4, there are a plurality of data buffers in a process of transmitting audio data from an application layer to the bottom-layer audio DSP of the controlling end or the controlled end, especially in a distributed audio playing scenario. As shown in FIG. 4, there are a plurality of frames of buffers in the audio framework and distributed audio transmission of the controlling end and the audio framework of the controlled end. These buffers are unnecessary and redundant. Each time a frame is buffered, a delay of one frame is caused. If N frames are buffered, the caused delay is N times of the one frame of delay. FIG. 5 is a diagram of a plurality of audio data buffers in a current distributed audio playing scenario. Generally, one frame of audio data is about 20 ms. As shown in FIG. 5, every three buffered frames cause a delay of 60 ms. As a result, a delay caused by redundant buffering may be more than 100 ms.

There is further multi-layer data copy in the audio playing system shown in FIG. 4. Music data is copied at each layer from the music application to the audio framework, the local HAL, the kernel, and the audio DSP. Although a frame of audio data is not too large, frequent copy still causes a delay and operation complexity.

Based on the foregoing technical problems, embodiments of the present invention provide an audio playing system, to reduce a delay of distributed audio playing, improve features such as audio-to-video synchronization and echo cancellation, and improve user experience.

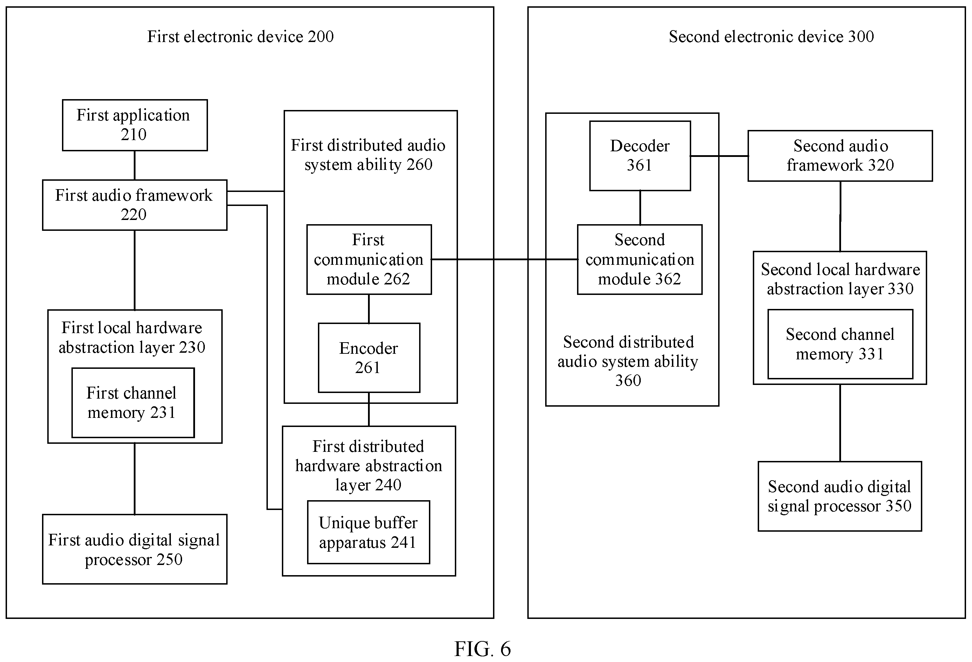

FIG. 6 is a diagram of an audio playing system according to an embodiment of the present invention. As shown in FIG. 6, the audio playing system includes a first electronic device 200 and a second electronic device 300. The first electronic device 200 includes a first application 210, a first audio framework 220, a first local hardware abstraction layer 230, a first distributed hardware abstraction layer 240, a first audio digital signal processor 250, and a first distributed audio system ability 260. The first local hardware abstraction layer 230 includes a first channel memory 231. The first distributed hardware abstraction layer 240 includes a unique buffer apparatus 241. The first distributed audio system ability 260 includes an encoder 261 and a first communication module 262. A first fast channel exists between the first audio framework 220 and the first audio digital signal processor 250, and the first channel memory 231 is a memory provided by the first local hardware abstraction layer 230 for the first fast channel.

The second electronic device 300 includes a second audio framework 320, a second local hardware abstraction layer 330, a second audio digital signal processor 350, and a second distributed audio system ability 360. The second local hardware abstraction layer 330 includes a second channel memory 331. The second distributed audio system ability 360 includes a decoder 361 and a second communication module 362. A second fast channel exists between the second audio framework 320 and the second audio digital signal processor 350, and the second channel memory 331 is a memory provided by the second local hardware abstraction layer 330 for the second fast channel.

The first electronic device 200 is in wired connection or wireless connection to the second electronic device 300.

For hardware structures and software structures of the first electronic device 200 and the second electronic device 300 provided in embodiments of the present invention, refer to related descriptions of the electronic device 100 in FIG. 1 and FIG. 2.

Compared with the audio playing system shown in FIG. 4, the audio playing system provided in embodiments of the present invention further includes the channel memory and the unique buffer apparatus. Specifically, the first local hardware abstraction layer 230 of the first electronic device 200 further includes the first channel memory 231, the first distributed hardware abstraction layer 240 further includes the unique buffer apparatus 241, and the second local hardware abstraction layer 330 of the second electronic device 300 further includes the second channel memory 331.

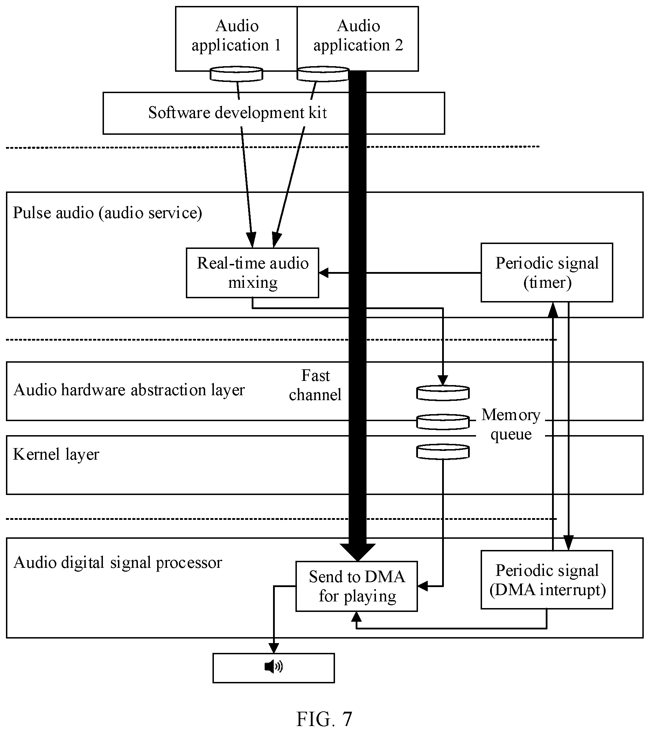

The channel memory is created by the local hardware abstraction layer of the electronic device, and the channel memory may be directly shared with an application, an audio framework, and an audio DSP, to implement a direct fast channel from the application or the audio framework to the bottom-layer audio DSP. FIG. 7 is a diagram of a principle of a fast channel according to an embodiment of the present invention. As shown in FIG. 7, through vertical integration of software and hardware, a memory queue created by a local HAL may be directly shared with an audio DSP, thereby reducing memory copy in the local HAL and the audio DSP. Specifically, the first electronic device 200 is used as an example. After being processed by the first audio framework 220, audio data of the first application 210 is directly written into a shared memory (namely, the first channel memory 231) created by the local HAL, and the bottom-layer first audio digital signal processor 250 directly reads the audio data from the shared memory and sends the audio data to DMA for playing. Therefore, embodiments of the present invention provide a direct fast channel from an application or an audio framework to the bottom-layer audio DSP, thereby reducing memory copy in the audio framework and the bottom-layer audio DSP, and reducing a playing delay of a local audio and a distributed audio.

Further, in the fast channel, a same memory queue, namely, a producer-consumer model, is used in the local HAL and the DSP. Therefore, the two kernels need to be synchronized.

Optionally, an inter-kernel synchronization mechanism includes a mechanism like a semaphore.

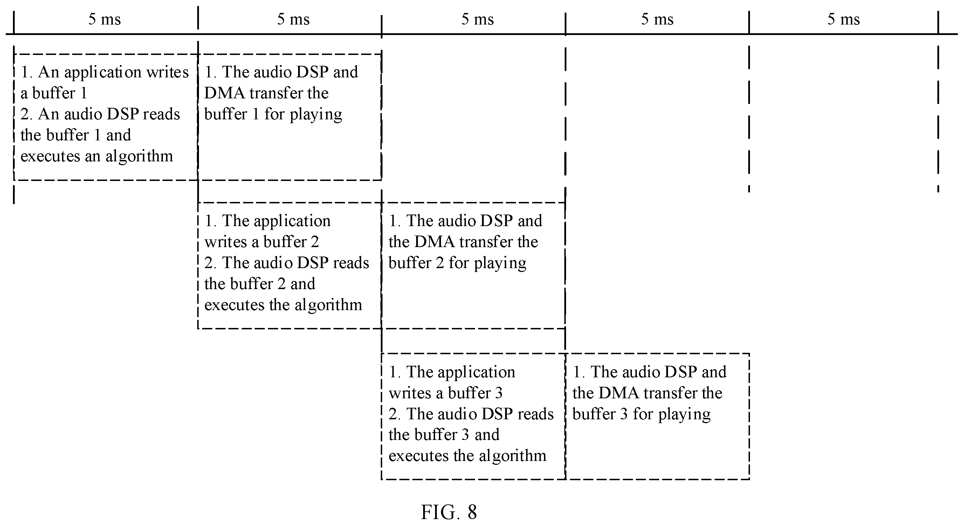

Optionally, the inter-kernel synchronization mechanism includes a time sequence-based synchronization mechanism. Embodiments of the present invention provide a time sequence-based synchronization mechanism. FIG. 8 is a diagram of a time sequence of a time sequence-based synchronization mechanism according to an embodiment of the present invention. As shown in FIG. 8, an example in which duration of a frame is 5 ms is used to describe the time sequence-based synchronization mechanism as follows.

In a first 5 ms, an application writes a first frame of buffer 1 into a memory queue. An audio DSP reads the first frame of buffer 1 and executes an algorithm, and the audio DSP does not play the first frame of buffer 1.

In a second 5 ms, the audio DSP plays the first frame of buffer 1. In this case, the application writes a second frame of buffer 2 into the memory queue, and the audio DSP reads the second frame of buffer 2 and executes the algorithm.

In a third 5 ms, the audio DSP plays the second frame of buffer 2. In this case, the application writes a third frame of buffer 3 into the memory queue, and the audio DSP reads the third frame of buffer 3 and executes the algorithm. This process is repeatedly performed, so that inter-kernel data synchronization is implemented, which is simpler and more efficient.

In embodiments of the present invention, the unique buffer apparatus is disposed in the electronic device. The unique buffer apparatus 241 includes a unique buffer address, and the unique buffer address is a unique address buffered in a process of transmitting distributed audio data from the first application 210 to the second electronic device 300. Therefore, in a process of transmitting the distributed audio data from the first application 210 to the second electronic device 300, the distributed audio data needs to be buffered in the first electronic device 200 only once. As shown in FIG. 6, the distributed HAL is responsible for creating the unique buffer apparatus and separately sending the buffered address to the audio framework and the distributed audio SA, and the audio framework and the distributed audio SA perform reading and writing through negotiation, to implement transmission of distributed audio data. Compared with the audio playing system shown in FIG. 4 that has a plurality of redundant buffers, in embodiments of the present invention, a redundant buffer is reduced, and a transmission delay is saved.

The audio playing system provided in embodiments of the present invention is applicable to an audio playing scenario, for example, a local playing scenario and a distributed audio playing scenario.

The audio playing system shown in FIG. 6 is described as follows by using a distributed audio playing scenario as an example.

The first electronic device 200 is configured to: generate a first playing request by using the first application 210 in response to a playing operation performed by a user in the first application 210 on a first audio, where the first playing request carries first audio data of the first audio and a device identifier of the second electronic device; write the first audio data into the unique buffer address based on the first playing request by invoking the first audio framework 220; and read the first audio data from the unique buffer address and send the first audio data to the second electronic device 300. The second electronic device 300 outputs the first audio data to a second output device of the second electronic device 300 through a second fast channel and an inter-kernel synchronization mechanism, to play the first audio. The unique buffer address is a unique address buffered in a process of transmitting the first audio data from the first application 210 to the second electronic device 300.

In embodiments of the present invention, the unique buffer address is not used to buffer audio data obtained by the first application 210 from a network, and is only used to buffer the first audio data transmitted from the first application 210 of the first electronic device 200 to the second electronic device 300.

The first application 210 is used to: generate the first playing request in response to the playing operation performed by the user in the first application 210 on the first audio, and send the first playing request to the first audio framework 220. The first playing request carries the first audio data of the first audio and the device identifier of the second electronic device 300.

In some possible embodiments, the first application 210 is used to: generate the first playing request in response to an operation of selecting, in the first application 210 by the user, the second electronic device 300 to play the first audio, and send the first playing request to the first audio framework 220.

For example, the first application 210 includes an audio application, namely, an application that can play an audio, for example, a music application, a game application, or an instant messaging application.

The first audio framework 220 is configured to: obtain the unique buffer address based on the first playing request; and write the first audio data into the unique buffer address based on the unique buffer address.

In some possible embodiments, the first audio framework 220 is specifically configured to: determine, based on the first playing request, whether a device identifier in the first playing request is a device identifier of the first electronic device 200, where if the first audio framework 220 determines that the device identifier in the first playing request is not the device identifier of the first electronic device 200, the first playing request is a distributed playing request, and in this case, the first audio framework 220 obtains the unique buffer address of the unique buffer apparatus 241 from the first distributed hardware abstraction layer 240; and write the first audio data into the unique buffer apparatus 241 of the first distributed hardware abstraction layer 240 based on the unique buffer address.

In some possible embodiments, the first audio framework 220 is further configured to send a read command to the encoder 261 of the first distributed audio system ability 260 after writing the first audio data into the unique buffer address, where the read command is used by the encoder 261 to read the first audio data from the unique buffer address of the unique buffer apparatus 241.

The first distributed audio system ability 260 is configured to: read the first audio data from the unique buffer address of the unique buffer apparatus 241, encode the first audio data, and send encoded first audio data to the second distributed audio system ability 360 of the second electronic device 300.

In some possible embodiments, the first distributed audio system ability 260 is specifically configured to: read the first audio data from the unique buffer address of the unique buffer apparatus 241 based on the read command, encode the first audio data, and send encoded first audio data to the second distributed audio system ability 360 of the second electronic device 300.

Specifically, the encoder 261 is configured to: read the first audio data from the unique buffer address of the unique buffer apparatus 241, encode the first audio data, and send the encoded first audio data to the first communication module 262. The first communication module 262 is configured to send the encoded first audio data to the second distributed audio system ability 360 of the second electronic device 300.

The second distributed audio system ability 360 is configured to: receive the encoded first audio data; decode the encoded first audio data to obtain the first audio data; and send the first audio data to the second audio framework 320.

Specifically, the second communication module 362 is configured to: receive the encoded first audio data, and send the encoded first audio data to the decoder 361. The decoder 361 is configured to: decode the encoded first audio data to obtain the first audio data; and send the first audio data to the second audio framework 320. In some possible embodiments, the second distributed audio system ability 360 further includes a proxy client. The decoder 361 sends the first audio data to the proxy client, and then the proxy client sends the first audio data to the second audio framework 320.

The second audio framework 320 is configured to output the first audio data to the second output device of the second electronic device 300 through the second fast channel and the inter-kernel synchronization mechanism, to play the first audio.

In some possible embodiments, the second audio framework 320 is configured to write the first audio data into the second channel memory 331 of the second local hardware abstraction layer 330 through the second fast channel. The second audio digital signal processor 350 is configured to: read the first audio data from the second channel memory 331 through the inter-kernel synchronization mechanism, and output the first audio data to the second output device of the second electronic device 300, to play the first audio. For example, the second output device of the second electronic device 300 includes a loudspeaker.

Optionally, the inter-kernel synchronization mechanism includes a mechanism like a semaphore.

Optionally, the inter-kernel synchronization mechanism includes a time sequence-based synchronization mechanism.

For example, when a user uses a MeeTime application in a mobile phone to perform a video call, because volume of the mobile phone is limited and cannot meet a requirement for large volume, the user projects audio in the MeeTime application to a sound box for playing. The original data channel used in the audio playing system shown in FIG. 4 has a delay, which usually causes a video image in the mobile phone to be asynchronous with a sound played by the sound box. Therefore, an audio playing delay needs to be reduced to resolve a problem of the audio and the video being asynchronous. The audio playing system provided in embodiments of the present invention can effectively reduce the audio playing delay, thereby improving an audio-to-video synchronization feature and improving user experience.

For example, when a user performs a conference call in a conference room, the user usually uses a microphone of a mobile phone to collect a sound, and uses a loudspeaker of a large screen device to play the sound. The original data channel used in the audio playing system shown in FIG. 4 has a delay, which usually causes an echo phenomenon. Therefore, an audio playing delay needs to be reduced to eliminate the echo. The audio playing system provided in embodiments of the present invention can effectively reduce the audio playing delay, thereby improving an echo cancellation feature and improving user experience.

In a distributed audio playing scenario, there are a plurality of redundant buffers in a local audio framework, distributed audio transmission, and a remote audio framework on the original data channel, which causes an unnecessary delay. In embodiments of the present invention, the unique buffer apparatus replaces a plurality of buffers in the controlling end of the original data channel, thereby reducing the plurality of redundant buffers in the original data channel and reducing the transmission delay while ensuring that no audio frame freezing occurs. In addition, in the original data channel, when the controlled end invokes the audio framework for playing, data is sent for playing through continuously copy. In embodiments of the present invention, directly through the fast channel, the controlled end invokes the audio framework to write the data into the memory provided by the local HAL, and the bottom-layer DSP directly reads the data and sends the data for playing. The fast-read channel from the application to the bottom-layer DSP reduces data copy at each layer in a local playing process, and reduces a delay. Further, the inter-kernel synchronization mechanism of the fast channel in embodiments of the present invention uses the time sequence-based data synchronization mechanism, which is simpler and more efficient. Further, in embodiments of the present invention, an audio play delay is reduced, to improve features such as audio-to-video synchronization and echo cancellation, and improve user experience.

The audio playing system shown in FIG. 6 is described as follows by using a local playing scenario as an example.

The first electronic device 200 is configured to: generate a second playing request in response to a playing operation performed by a user in the first application 210 on a second audio, where the second playing request carries second audio data of the second audio and a device identifier of the first electronic device 200; and output the second audio data to a first output device of the first electronic device 200 based on the second playing request through the first fast channel and the inter-kernel synchronization mechanism, to play the second audio.

The first application 210 is used to: in response to the playing operation performed by the user in the first application 210 on the second audio, generate the second playing request and send the second playing request to the first audio framework 220. The second playing request carries the second audio data of the second audio and the device identifier of the first electronic device 200.

In some possible embodiments, the first application 210 is used to generate the second playing request in response to an operation of selecting, in the first application 210 by the user, the second electronic device 300 to play the second audio, and send the second playing request to the first audio framework 220.

For example, the first application 210 includes an audio application, namely, an application that can play an audio, for example, a music application, a game application, or an instant messaging application.

The first audio framework 220 is configured to output the second audio data to the first output device of the first electronic device 200 based on the second playing request through the first fast channel and the inter-kernel synchronization mechanism, to play the second audio.

In some possible embodiments, the first audio framework 220 is configured to write the second audio data into the first channel memory 231 of the first local hardware abstraction layer 230 based on the second playing request through the first fast channel. The first audio digital signal processor 250 is configured to: read the second audio data from the first channel memory 231 through the time sequence-based synchronization mechanism, and output the second audio data to the first output device of the first electronic device 200, to play the second audio. For example, the first output device of the first electronic device 200 includes a loudspeaker.

In the local playing scenario, in the original data channel, when an electronic device invokes an audio framework for playing, data is sent for playing through continuously copy. In embodiments of the present invention, directly through the fast channel, the audio framework writes data into the memory provided by the local HAL, and the bottom-layer DSP directly reads the data and sends the data for playing. The fast-read channel from the application to the bottom-layer DSP reduces data copy at each layer in a local playing process, and reduces a delay. In addition, the inter-kernel synchronization mechanism of the fast channel in embodiments of the present invention uses the time sequence-based data synchronization mechanism, which is simpler and more efficient.

In embodiments of the present invention, playing of the first audio and playing of the second audio may exist at the same time, or may exist independently.

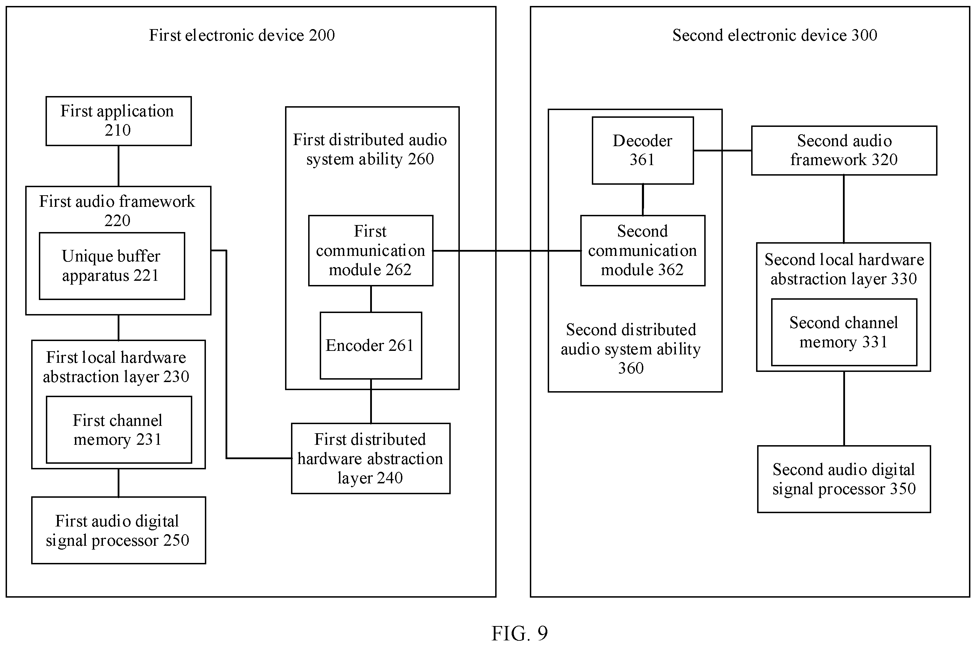

Further, an embodiment of the present invention provides another audio playing system. FIG. 9 is a diagram of the another audio playing system according to an embodiment of the present invention. As shown in FIG. 9, compared with the audio playing system shown in FIG. 6, the audio playing system shown in FIG. 9 has the following differences.

Difference 1: The unique buffer apparatus is created by the audio framework, instead of the distributed hardware abstraction layer. As shown in FIG. 9, the first audio framework 220 further includes a unique buffer apparatus 221, and the first distributed hardware abstraction layer 240 does not include a unique buffer apparatus.

Difference 2: In a distributed audio playing scenario, the first audio framework 220 is configured to: obtain a unique buffer address from the unique buffer apparatus 221 based on a first playing request, and write the first audio data into the unique buffer apparatus 221 based on the unique buffer address. In some possible embodiments, the first audio framework 220 is further configured to send a read command to the first distributed hardware abstraction layer 240 after writing first audio data into the unique buffer apparatus 221. The first distributed hardware abstraction layer 240 is configured to: read the first audio data from the unique buffer apparatus 221 based on the read command, and send the first audio data to the encoder 261 of the first distributed audio system ability 260.

Except for the foregoing two differences, the audio playing system shown in FIG. 9 is the same as the audio playing system shown in FIG. 6. For details, refer to the embodiment of the audio playing system shown in FIG. 6. Details are not described herein again.

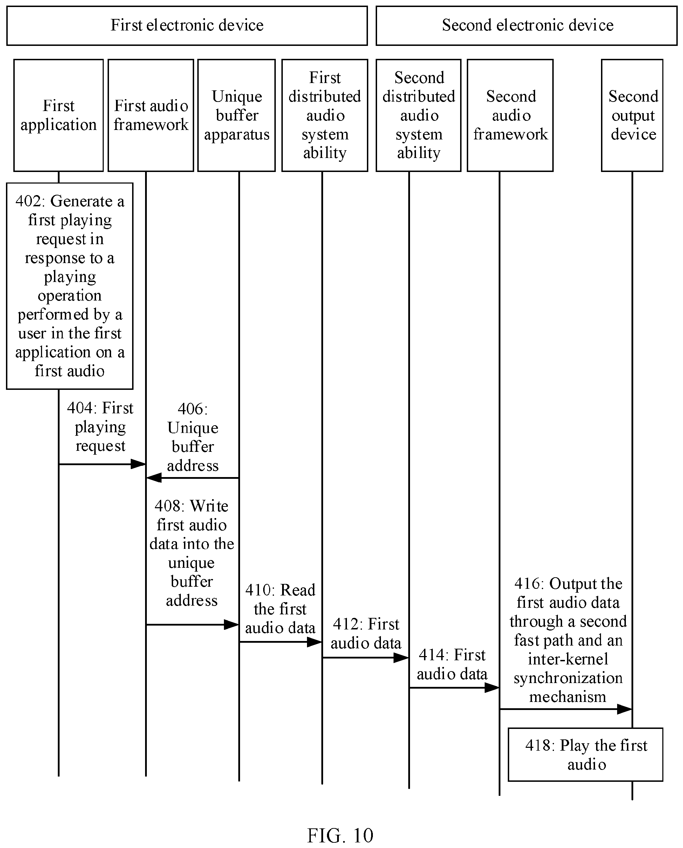

Based on the audio playing systems shown in FIG. 6 to FIG. 9, an embodiment of the present invention provides an audio playing method. FIG. 10 is a diagram of signaling interaction of an audio playing method according to an embodiment of the present invention. As shown in FIG. 10, the method includes the following steps.

Step 402: A first application generates a first playing request in response to a playing operation performed by a user in the first application on a first audio.

In this step, as shown in FIG. 6 and FIG. 9, the first application generates the first playing request in response to the playing operation performed by the user in the first application on the first audio. The first playing request carries first audio data of the first audio and a device identifier of a second electronic device.

In some possible embodiments, step 402 specifically includes: The first application generates the first playing request in response to an operation of selecting, in the first application by the user, the second electronic device to play the first audio.

For example, the first application includes an audio application, namely, an application that can play an audio, for example, a music application, a game application, or an instant messaging application.

Step 404: The first application sends the first playing request to a first audio framework.

Step 406: The first audio framework obtains a unique buffer address based on the first playing request.

In this step, as shown in FIG. 6 and FIG. 9, the first audio framework obtains the unique buffer address based on the first playing request.

In some possible embodiments, step 406 specifically includes the following steps.

Step 406a: The first audio framework determines, based on the first playing request, whether a device identifier in the first playing request is a device identifier of the first electronic device.

In this step, after receiving the first playing request, the first audio framework determines, based on the device identifier in the first playing request, that the first playing request is a local playing request or a distributed playing request. Specifically, if the device identifier in the first playing request is the device identifier of the first electronic device, the first playing request is the local playing request; or if the device identifier in the first playing request is not the device identifier of the first electronic device, the first playing request is the distributed playing request.

Step 406b: The first audio framework determines that the device identifier in the first playing request is not the device identifier of the first electronic device, and obtains the unique buffer address of a unique buffer apparatus.

Because the first playing request carries the device identifier of the second electronic device, the first audio framework determines that the device identifier in the first playing request is not the device identifier of the first electronic device. In this case, the first playing request is the distributed playing request, and the first audio data is distributed audio data.

The unique buffer apparatus is an apparatus, in the first electronic device, configured to provide the unique buffer address in a process of transmitting distributed audio data from the first application to the second electronic device. The unique buffer address is a unique address buffered in a process of transmitting the first audio data from the first application to the second electronic device. Therefore, in a process of transmitting the first audio data, the first audio data needs to be buffered in the first electronic device only once. Compared with the audio playing system shown in FIG. 4 in which there are a plurality of redundant buffers, in embodiments of the present invention, a redundant buffer is reduced, and a transmission delay is reduced.

In embodiments of the present invention, the unique buffer address is not used to buffer audio data obtained by the first application from a network, and is only used to buffer the first audio data transmitted from the first application of the first electronic device to the second electronic device.

As shown in FIG. 6, the distributed HAL is responsible for creating the unique buffer apparatus and separately sending the buffered address to the audio framework and the distributed audio SA, and the audio framework and the distributed audio SA perform reading and writing through negotiation, to implement transmission of distributed audio data. Therefore, the unique buffer apparatus is located at a first distributed hardware abstraction layer, and the first audio framework obtains the unique buffer address from the first distributed hardware abstraction layer.

As shown in FIG. 9, the audio framework is responsible for creating the unique buffer apparatus and sending the buffered address to the distributed HAL, and the audio framework and the distributed HAL perform reading and writing through negotiation, to implement transmission of distributed audio data. The unique buffer apparatus is located at the first audio framework, and the first audio framework obtains the unique buffer address from the unique buffer apparatus.

Step 408: The first audio framework writes the first audio data into the unique buffer address.

As shown in FIG. 6, step 408 specifically includes: The first audio framework writes the first audio data into the unique buffer apparatus of the first distributed hardware abstraction layer based on the unique buffer address.

In some possible embodiments, the first audio framework sends a read command to an encoder of a first distributed audio system ability after writing the first audio data into the unique buffer address, where the read command is used by the first distributed audio system ability to read the first audio data from the unique buffer address.

As shown in FIG. 9, step 408 specifically includes: The first audio framework writes the first audio data into the unique buffer apparatus based on the unique buffer address.

In some possible embodiments, after writing the first audio data into the unique buffer address, the first audio framework sends a read command to a first distributed hardware abstraction layer, where the read command is used by the first distributed hardware abstraction layer to read the first audio data from the unique buffer address.

Step 410: The first distributed audio system ability reads the first audio data from the unique buffer address.

As shown in FIG. 6, the first distributed audio system ability reads the first audio data from the unique buffer address in the unique buffer apparatus.

In some possible embodiments, the encoder reads the first audio data from the unique buffer apparatus based on the read command.

As shown in FIG. 9, the first distributed audio system ability reads the first audio data from the unique buffer address in the unique buffer apparatus through the first distributed hardware abstraction layer. Specifically, after reading the first audio data from the unique buffer address in the unique buffer apparatus, the first distributed hardware abstraction layer sends the first audio data to the encoder of the first distributed audio system ability.

In some possible embodiments, the first distributed hardware abstraction layer reads the first audio data from the unique buffer address in the unique buffer apparatus based on the read command, and then sends the first audio data to the encoder.

Step 412: The first distributed audio system ability sends the first audio data to a second distributed audio system ability.

As shown in FIG. 6 and FIG. 9, the first distributed audio system ability includes the encoder and a first communication module, and the second distributed audio system ability includes a second communication module and a decoder.

In some possible embodiments, step 412 specifically includes the following steps.

Step 412a: The encoder encodes the first audio data, to obtain encoded first audio data.

In this step, as shown in FIG. 6 and FIG. 9, the encoder encodes the first audio data, to obtain the encoded first audio data.

Step 412b: The encoder sends the encoded first audio data to the first communication module.

In this step, as shown in FIG. 6 and FIG. 9, the encoder sends the encoded first audio data to the first communication module.

Step 412c: The first communication module sends the encoded first audio data to the second communication module.

In this step, as shown in FIG. 6 and FIG. 9, the first communication module sends the encoded first audio data to the second communication module of the second distributed audio system ability of the second electronic device.

The first electronic device is in wired or wireless connection to the second electronic device. Data transmission is implemented between the first electronic device and the second electronic device through the first communication module and the second communication module.

Step 412d: The second communication module sends the encoded first audio data to the decoder.

In this step, as shown in FIG. 6 and FIG. 9, the second communication module sends the encoded first audio data to the decoder.

Step 412e: The decoder decodes the encoded first audio data, to obtain the first audio data.

In this step, as shown in FIG. 6 and FIG. 9, the decoder decodes the encoded first audio data, to obtain the first audio data.

Step 414: The second distributed audio system ability sends the first audio data to a second audio framework.

In some possible embodiments, step 414 specifically includes: The decoder sends the first audio data to the second audio framework.

In this step, as shown in FIG. 6 and FIG. 9, the decoder sends the first audio data to the second audio framework.

In some possible embodiments, the second distributed audio system ability further includes a proxy client. The decoder sends the first audio data to the proxy client, and then the proxy client sends the first audio data to the second audio framework.

Step 416: The second audio framework outputs the first audio data to a second output device of the second electronic device through a second fast channel and the inter-kernel synchronization mechanism.

In some possible embodiments, step 416 specifically includes the following steps.

Step 416a: The second audio framework writes the first audio data into a second channel memory of a second local hardware abstraction layer through the second fast channel.

In this step, as shown in FIG. 6 and FIG. 9, the second audio framework writes the first audio data into the second channel memory of the second local hardware abstraction layer through the second fast channel.

The second channel memory is created by the second local hardware abstraction layer of the second electronic device, and the second channel memory may be directly shared with an application, the second audio framework, and a second audio DSP, to implement a direct fast channel from the application or the audio framework to the bottom-layer audio DSP. FIG. 7 is a diagram of a principle of a fast channel according to an embodiment of the present invention. As shown in FIG. 7, through vertical integration of software and hardware, a memory queue created by a local HAL may be directly shared with an audio DSP, thereby reducing memory copy in the local HAL and the audio DSP. Therefore, an embodiment of the present invention provides a direct fast channel from an application or an audio framework to the bottom-layer audio DSP, thereby reducing memory copy in the audio framework and the bottom-layer audio DSP, and reducing a playing delay of a local audio and a distributed audio.

Step 416b: A second audio digital signal processor reads the first audio data from the second channel memory through the inter-kernel synchronization mechanism.

In this step, as shown in FIG. 6 and FIG. 9, the second audio digital signal processor reads the first audio data from the second channel memory through the inter-kernel synchronization mechanism.

In the fast channel, a same memory queue, namely, a producer-consumer model, is used in the local HAL and the DSP. Therefore, the two kernels need to be synchronized.

Optionally, the inter-kernel synchronization mechanism includes a mechanism like a semaphore.

Optionally, the inter-kernel synchronization mechanism includes a time sequence-based synchronization mechanism. Embodiments of the present invention provide the time sequence-based synchronization mechanism, which is simpler and more efficient. As shown in FIG. 8, an example in which duration of a frame is 5 ms is used to describe the time sequence-based synchronization mechanism as follows.

In a first 5 ms, an application writes a first frame of buffer 1 into a memory queue. An audio DSP reads the first frame of buffer 1 and executes an algorithm, and the audio DSP does not play the first frame of buffer 1.

In a second 5 ms, the audio DSP plays the first frame of buffer 1. In this case, the application writes a second frame of buffer 2 into the memory queue, and the audio DSP reads the second frame of buffer 2 and executes the algorithm.

In a third 5 ms, the audio DSP plays the second frame of buffer 2. In this case, the application writes a third frame of buffer 3 into the memory queue, and the audio DSP reads the third frame of buffer 3 and executes the algorithm. This process is repeatedly performed, so that inter-kernel data synchronization is implemented.

Step 416c: The second audio digital signal processor outputs the first audio data to the second output device of the second electronic device.

In this step, the second audio digital signal processor outputs the first audio data to the second output device (not shown in FIG. 6 and FIG. 9) of the second electronic device. For example, the second output device of the second electronic device includes a loudspeaker.

Step 418: The second output device plays the first audio.

In the technical solutions of the audio playing method provided in embodiments of the present invention, the unique buffer apparatus is disposed at the distributed hardware abstraction layer of a controlling end, and a plurality of buffers of the controlling end in an original data channel are replaced by the unique buffer apparatus, thereby reducing a plurality of redundant buffers on the original data channel, and reducing a transmission delay while ensuring that no audio frame freezing occurs. During playing at a controlled end, through the fast channel, the audio framework is invoked to write data into the memory provided by the local HAL, and the bottom-layer DSP directly reads the data and sends the data for playing. The fast-read channel from the application to the bottom-layer DSP reduces data copy at each layer during local playing and reduces a delay. The inter-kernel synchronization mechanism of the fast channel uses the time sequence-based data synchronization mechanism, which is simpler and more efficient.

For example, when a user uses a MeeTime application in a mobile phone to perform a video call, because volume of the mobile phone is limited and cannot meet a requirement for large volume, the user projects audio in the MeeTime application to a sound box for playing. The original data channel used in the audio playing system shown in FIG. 4 has a delay, which usually causes a video image in the mobile phone to be asynchronous with a sound played by the sound box. Therefore, an audio playing delay needs to be reduced to resolve a problem of the audio and the video being asynchronous. The audio playing system provided in embodiments of the present invention can effectively reduce the audio playing delay, thereby improving an audio-to-video synchronization feature and improving user experience.

For example, when a user performs a conference call in a conference room, the user usually uses a microphone of a mobile phone to collect a sound, and uses a loudspeaker of a large screen device to play the sound. The original data channel used in the audio playing system shown in FIG. 4 has a delay, which usually causes an echo phenomenon. Therefore, an audio playing delay needs to be reduced to eliminate the echo. The audio playing system provided in embodiments of the present invention can effectively reduce the audio playing delay, thereby improving an echo cancellation feature and improving user experience.

Therefore, in embodiments of the present invention, an audio play delay is reduced, to improve features such as audio-to-video synchronization and echo cancellation, and improve user experience.

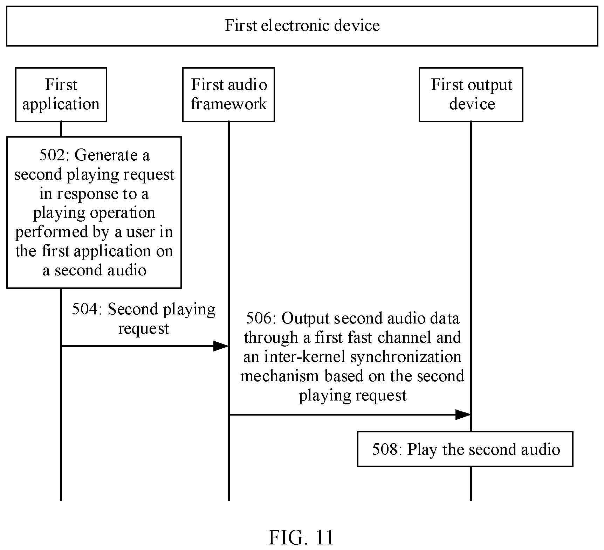

Based on the audio playing systems shown in FIG. 6 to FIG. 9, an embodiment of the present invention provides another audio playing method. FIG. 11 is a diagram of signaling interaction of the another audio playing method according to an embodiment of the present invention. As shown in FIG. 11, the method includes the following steps.

Step 502: A first application generates a second playing request in response to a playing operation performed by a user in the first application on a second audio.

In this step, as shown in FIG. 6 and FIG. 9, the first application generates the second playing request in response to the playing operation performed by the user in the first application on the second audio. The second playing request carries second audio data of the second audio and a device identifier of a first electronic device.

In some possible embodiments, step 502 specifically includes: The first application generates the first playing request in response to an operation of selecting, in the first application by the user, the first electronic device to play the first audio.

For example, the first application includes an audio application, namely, an application that can play an audio, for example, a music application, a game application, or an instant messaging application.

Step 504: The first application sends the second playing request to a first audio framework.

In this step, as shown in FIG. 6 and FIG. 9, the first application sends the second playing request to the first audio framework.

Step 506: The first audio framework outputs the second audio data to a first output device of the first electronic device based on the second playing request through a first fast channel and an inter-kernel synchronization mechanism.

In some possible embodiments, step 506 specifically includes the following steps.

Step 506a: The first audio framework determines, based on the second playing request, whether a device identifier in the second playing request is the device identifier of the first electronic device.

In this step, after receiving the second playing request, the first audio framework determines, based on the device identifier in the second playing request, that the second playing request is a local playing request or a distributed playing request. Specifically, if the device identifier in the second playing request is the device identifier of the first electronic device, the second playing request is the local playing request; or if the device identifier in the second playing request is not the device identifier of the first electronic device, the second playing request is the distributed playing request.

Step 506b: The first audio framework determines that the device identifier in the second playing request is the device identifier of the first electronic device, and writes the second audio data into a first channel memory of a first local hardware abstraction layer through the first fast channel.

Because the second playing request carries the device identifier of the first electronic device, the first audio framework determines that the device identifier in the second playing request is the device identifier of the first electronic device, the second playing request is the local playing request, and the second audio data is local audio data.

In this step, as shown in FIG. 6 and FIG. 9, the first audio framework writes the second audio data into the first channel memory of the first local hardware abstraction layer through the first fast channel.

The first channel memory is created by the first local hardware abstraction layer of the first electronic device, and the first channel memory may be directly shared with an application, a first audio framework, and a first audio DSP, to implement a direct fast channel from the application or the audio framework to the bottom-layer audio DSP. FIG. 7 is a diagram of a principle of a fast channel according to an embodiment of the present invention. As shown in FIG. 7, through vertical integration of software and hardware, a memory queue created by a local HAL may be directly shared with an audio DSP, thereby reducing memory copy in the local HAL and the audio DSP. Therefore, an embodiment of the present invention provides a direct fast channel from an application or an audio framework to the bottom-layer audio DSP, thereby reducing memory copy in the audio framework and the bottom-layer audio DSP, and reducing a playing delay of a local audio and a distributed audio.

Step 506c: A first audio digital signal processor reads the second audio data from the first channel memory through the inter-kernel synchronization mechanism.

In this step, as shown in FIG. 6 and FIG. 9, the first audio digital signal processor reads the second audio data from the first channel memory through the inter-kernel synchronization mechanism.

In the fast channel, a same memory queue, namely, a producer-consumer model, is used in the local HAL and the DSP. Therefore, the two kernels need to be synchronized.

Optionally, the inter-kernel synchronization mechanism includes a mechanism like a semaphore.

Optionally, the inter-kernel synchronization mechanism includes a time sequence-based synchronization mechanism. Embodiments of the present invention provide the time sequence-based synchronization mechanism, which is simpler and more efficient. As shown in FIG. 8, an example in which duration of a frame is 5 ms is used to describe the time sequence-based synchronization mechanism as follows.

In a first 5 ms, an application writes a first frame of buffer 1 into a memory queue. An audio DSP reads the first frame of buffer 1 and executes an algorithm, and the audio DSP does not play the first frame of buffer 1.

In a second 5 ms, the audio DSP plays the first frame of buffer 1. In this case, the application writes a second frame of buffer 2 into the memory queue, and the audio DSP reads the second frame of buffer 2 and executes the algorithm.

In a third 5 ms, the audio DSP plays the second frame of buffer 2. In this case, the application writes a third frame of buffer 3 into the memory queue, and the audio DSP reads the third frame of buffer 3 and executes the algorithm. This process is repeatedly performed, so that inter-kernel data synchronization is implemented.

Step 506d: The first audio digital signal processor outputs the second audio data to the first output device of the first electronic device.

In this step, the first audio digital signal processor outputs the second audio data to the first output device (not shown in FIG. 6 and FIG. 9) of the first electronic device. For example, the first output device of the first electronic device includes a loudspeaker.

Step 508: The first output device plays the second audio.

In the technical solutions of the audio playing method provided in embodiments of the present invention, during local audio playing, directly through a fast channel, an electronic device invokes an audio framework to write data into a memory provided by a local HAL, and a bottom-layer DSP directly reads the data and sends the data for playing. The fast-read channel from the application to the bottom-layer DSP reduces data copy at each layer in a local playing process, and reduces a delay. In addition, an inter-kernel synchronization mechanism of the fast channel uses a time sequence-based data synchronization mechanism, which is simpler and more efficient.

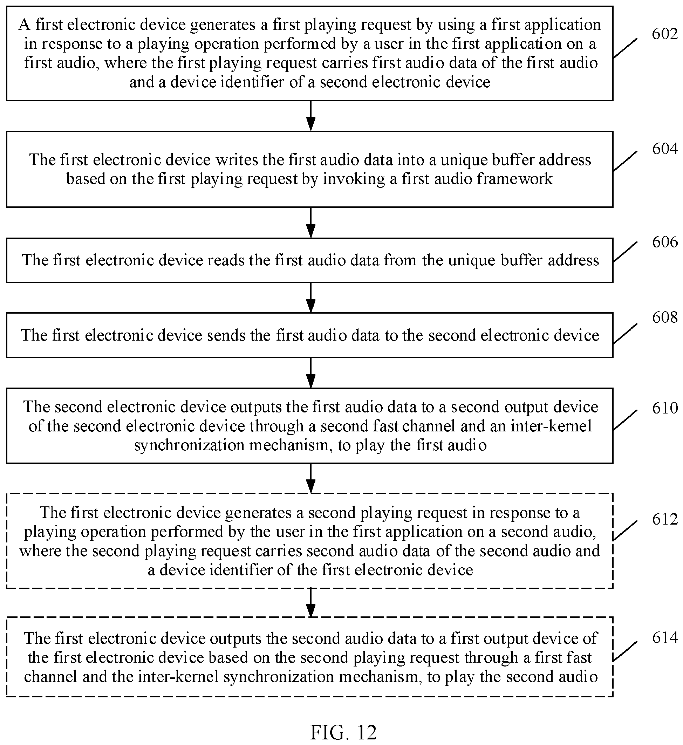

Based on the audio playing systems shown in FIG. 6 to FIG. 9, an embodiment of the present invention provides still another audio playing method. FIG. 12 is a flowchart of an audio playing method according to an embodiment of the present invention. As shown in FIG. 12, the method includes the following steps.

Step 602: A first electronic device generates a first playing request by using a first application in response to a playing operation performed by a user in the first application on a first audio, where the first playing request carries first audio data of the first audio and a device identifier of a second electronic device.

For example, the first application includes an audio application, namely, an application that can play an audio, for example, a music application, a game application, or an instant messaging application.

In some possible embodiments, step 602 specifically includes: The first electronic device generates the first playing request by using the first application in response to an operation of selecting, in the first application by the user, the second electronic device to play the first audio. For example, when the user uses a MeeTime application in a mobile phone to perform a video call, because volume of the mobile phone is limited and cannot meet a requirement for large volume, the user projects audio in the MeeTime application to a sound box for playing, so that the playing request carries audio data and a device identifier of the sound box.

Step 604: The first electronic device writes the first audio data into a unique buffer address based on the first playing request by invoking a first audio framework.

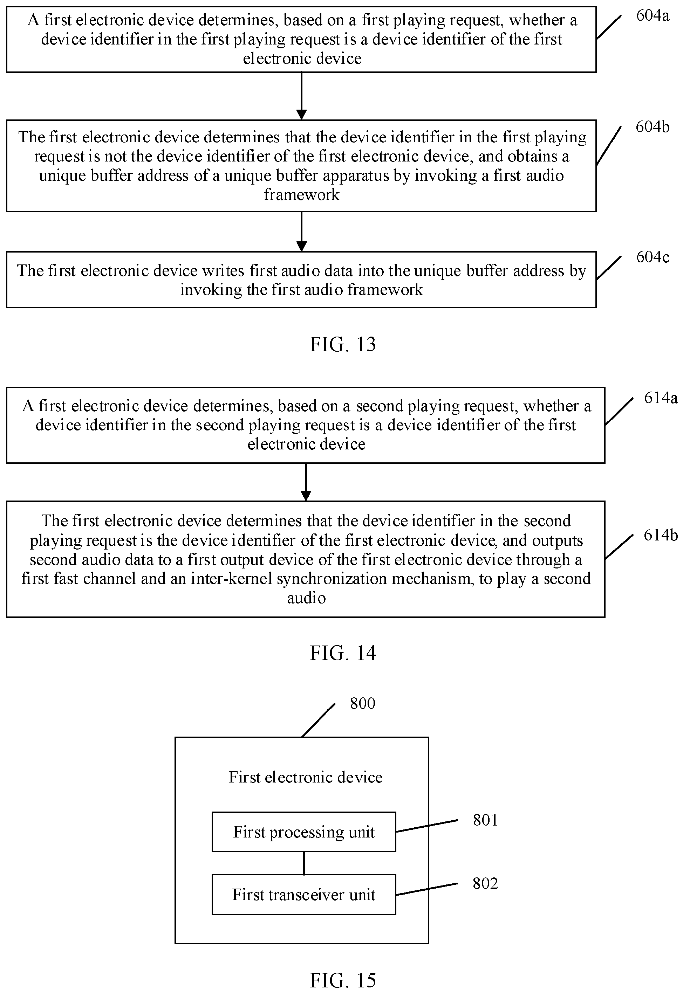

In some possible embodiments, as shown in FIG. 13, step 604 specifically includes the following steps.

Step 604a: The first electronic device determines, based on the first playing request, whether a device identifier in the first playing request is a device identifier of the first electronic device.

The first electronic device determines, based on the device identifier in the first playing request, that the first playing request is a local playing request or a distributed playing request. Specifically, if the device identifier in the first playing request is the device identifier of the first electronic device, the first playing request is the local playing request; or if the device identifier in the first playing request is not the device identifier of the first electronic device, the first playing request is the distributed playing request.

Step 604b: The first electronic device determines that the device identifier in the first playing request is not the device identifier of the first electronic device, and obtains a unique buffer address of a unique buffer apparatus by invoking the first audio framework.

Because the first playing request carries the device identifier of the second electronic device, the first audio framework determines that the device identifier in the first playing request is not the device identifier of the first electronic device. In this case, the first playing request is the distributed playing request, and the first audio data is distributed audio data.

The unique buffer address is a unique address buffered in a process of transmitting the first audio data from the first application to the second electronic device. The unique buffer address is provided by the unique buffer apparatus. Therefore, in a process of transmitting the first audio data, the first audio data needs to be buffered in the first electronic device only once. Compared with the audio playing system shown in FIG. 4 in which there are a plurality of redundant buffers, in embodiments of the present invention, a redundant buffer is reduced, and a transmission delay is reduced.

In embodiments of the present invention, the unique buffer address is not used to buffer audio data obtained by the first application from a network, and is only used to buffer the first audio data transmitted from the first application of the first electronic device to the second electronic device.

As shown in FIG. 6, the distributed HAL is responsible for creating the unique buffer apparatus and separately sending the buffered address to the audio framework and the distributed audio SA, and the audio framework and the distributed audio SA perform reading and writing through negotiation, to implement transmission of distributed audio data. Therefore, the unique buffer apparatus is located at a first distributed hardware abstraction layer, and the first audio framework obtains the unique buffer address from the first distributed hardware abstraction layer.

As shown in FIG. 9, the audio framework is responsible for creating the unique buffer apparatus and sending the buffered address to the distributed HAL, and the audio framework and the distributed HAL perform reading and writing through negotiation, to implement transmission of distributed audio data. The unique buffer apparatus is located at the first audio framework, and the first audio framework obtains the unique buffer address from the unique buffer apparatus.

Step 604c: The first electronic device writes the first audio data into the unique buffer address by invoking the first audio framework.

Step 606: The first electronic device reads the first audio data from the unique buffer address.

Step 608: The first electronic device sends the first audio data to the second electronic device.

In some possible embodiments, before step 608, the method further includes: The first electronic device encodes the first audio data, to obtain encoded first audio data. Step 608 specifically includes: The first electronic device sends the encoded first audio data to the second electronic device.

Step 610: The second electronic device outputs the first audio data to a second output device of the second electronic device through a second fast channel and the inter-kernel synchronization mechanism, to play the first audio.

As shown in FIG. 6 and FIG. 9, the second fast channel exists between the second audio framework and the second audio digital signal processor, and the second channel memory is a memory provided by the second local hardware abstraction layer for the second fast channel. The second channel memory is created by the second local hardware abstraction layer of the second electronic device, and the second channel memory may be directly shared with an application, the second audio framework, and the second audio DSP, to implement a direct fast channel from the application or the audio framework to the bottom-layer audio DSP. FIG. 7 is a diagram of a principle of a fast channel according to an embodiment of the present invention. As shown in FIG. 7, through vertical integration of software and hardware, a memory queue created by a local HAL may be directly shared with an audio DSP, thereby reducing memory copy in the local HAL and the audio DSP. Therefore, embodiments of the present invention provide a direct fast channel from an application or an audio framework to the bottom-layer audio DSP, thereby reducing memory copy in the audio framework and the bottom-layer audio DSP, and reducing a playing delay of a local audio and a distributed audio.

In the fast channel, a same memory queue, namely, a producer-consumer model, is used in the local HAL and the DSP. Therefore, the two kernels need to be synchronized.

Optionally, the inter-kernel synchronization mechanism includes a mechanism like a semaphore.

Optionally, the inter-kernel synchronization mechanism includes a time sequence-based synchronization mechanism. Embodiments of the present invention provide a time sequence-based synchronization mechanism, which is simpler and more efficient. As shown in FIG. 8, an example in which duration of a frame is 5 ms is used to describe the time sequence-based synchronization mechanism as follows.

In a first 5 ms, an application writes a first frame of buffer 1 into a memory queue. An audio DSP reads the first frame of buffer 1 and executes an algorithm, and the audio DSP does not play the first frame of buffer 1.

In a second 5 ms, the audio DSP plays the first frame of buffer 1. In this case, the application writes a second frame of buffer 2 into the memory queue, and the audio DSP reads the second frame of buffer 2 and executes the algorithm.

In a third 5 ms, the audio DSP plays the second frame of buffer 2. In this case, the application writes a third frame of buffer 3 into the memory queue, and the audio DSP reads the third frame of buffer 3 and executes the algorithm. This process is repeatedly performed, so that inter-kernel data synchronization is implemented.

The second output device of the second electronic device includes a loudspeaker.

Optionally, before step 610, the method further includes: The second electronic device receives the encoded first audio data sent by the first electronic device, and decodes the encoded first audio data to obtain the first audio data.

Optionally, after step 610, the method further includes the following steps.

Step 612: The first electronic device generates a second playing request in response to a playing operation performed by the user in the first application on a second audio, where the second playing request carries second audio data of the second audio and the device identifier of the first electronic device.

In some possible embodiments, step 612 specifically includes: The first electronic device generates the second playing request in response to an operation of selecting, in the first application by the user, the first electronic device to play the second audio, where the second playing request carries the second audio data of the second audio and the device identifier of the first electronic device.

Step 614: The first electronic device outputs the second audio data to a first output device of the first electronic device based on the second playing request through a first fast channel and the inter-kernel synchronization mechanism, to play the second audio.

In some possible embodiments, as shown in FIG. 14, step 614 specifically includes the following steps.

Step 614a: The first electronic device determines, based on the second playing request, whether a device identifier in the second playing request is the device identifier of the first electronic device.

The first electronic device determines, based on the device identifier in the second playing request, that the second playing request is a local playing request or a distributed playing request. Specifically, if the device identifier in the second playing request is the device identifier of the first electronic device, the second playing request is the local playing request; or if the device identifier in the second playing request is not the device identifier of the first electronic device, the second playing request is the distributed playing request.

Step 614b: The first electronic device determines that the device identifier in the second playing request is the device identifier of the first electronic device, and outputs the second audio data to the first output device of the first electronic device through the first fast channel and the inter-kernel synchronization mechanism, to play the second audio.

Because the second playing request carries the device identifier of the first electronic device, the first audio framework determines that the device identifier in the second playing request is the device identifier of the first electronic device, the second playing request is the local playing request, and the second audio data is local audio data.

As shown in FIG. 6 and FIG. 9, the first fast channel exists between the first audio framework and the first audio digital signal processor, and the first channel memory is a memory provided by the first local hardware abstraction layer for the first fast channel. The first channel memory is created by the first local hardware abstraction layer of the first electronic device, and the first channel memory may be directly shared with an application, the first audio framework, and the first audio DSP, to implement a direct fast channel from the application or the audio framework to the bottom-layer audio DSP. FIG. 7 is a diagram of a principle of a fast channel according to an embodiment of the present invention. As shown in FIG. 7, through vertical integration of software and hardware, a memory queue created by a local HAL may be directly shared with an audio DSP, thereby reducing memory copy in the local HAL and the audio DSP. Therefore, embodiments of the present invention provide a direct fast channel from an application or an audio framework to the bottom-layer audio DSP, thereby reducing memory copy in the audio framework and the bottom-layer audio DSP, and reducing a playing delay of a local audio and a distributed audio.

The first output device of the first electronic device includes a loudspeaker.

A sequence between steps 602 to 610 and steps 612 to 614 is not specifically limited. Steps 602 to 610 may be performed before steps 612 to 614, or steps 612 to 614 may be performed before steps 602 to 610. In addition, steps 602 to 610 and steps 612 to 614 may alternatively be separately performed.

For example, when a user uses a MeeTime application in a mobile phone to perform a video call, because volume of the mobile phone is limited and cannot meet a requirement for large volume, the user projects audio in the MeeTime application to a sound box for playing. The original data channel used in the audio playing system shown in FIG. 4 has a delay, which usually causes a video image in the mobile phone to be asynchronous with a sound played by the sound box. Therefore, an audio playing delay needs to be reduced to resolve a problem of the audio and the video being asynchronous. The audio playing method provided in embodiments of the present invention can effectively reduce the audio playing delay, thereby improving an audio-to-video synchronization feature and improving user experience.

For example, when a user performs a conference call in a conference room, the user usually uses a microphone of a mobile phone to collect a sound, and uses a loudspeaker of a large screen device to play the sound. The original data channel used in the audio playing system shown in FIG. 4 has a delay, which usually causes an echo phenomenon. Therefore, an audio playing delay needs to be reduced to eliminate the echo. The audio playing method provided in embodiments of the present invention can effectively reduce the audio playing delay, thereby improving an echo cancellation feature and improving user experience.

In the technical solutions of the audio playing method provided in embodiments of the present invention, a first electronic device generates a first playing request by using a first application in response to a playing operation performed by a user in the first application on a first audio, where the first playing request carries first audio data of the first audio and a device identifier of a second electronic device; writes the first audio data into a unique buffer address based on the first playing request by invoking a first audio framework; and reads the first audio data from the unique buffer address, and sends the first audio data to the second electronic device, where the unique buffer address is a unique address buffered in a process of transmitting the first audio data from the first application to the second electronic device. The second electronic device outputs the first audio data to a second output device of the second electronic device through a second fast channel and an inter-kernel synchronization mechanism, to play the first audio. This can reduce a delay of distributed audio playing, thereby improving features such as audio-to-video synchronization and echo cancellation, and improving user experience.

FIG. 15 is a diagram of a structure of a first electronic device according to an embodiment of the present invention. It should be understood that a first electronic device 700 can perform steps of the first electronic device in the foregoing audio playing method. To avoid repetition, details are not described herein again. The first electronic device 700 includes a first processing unit 701 and a first transceiver unit 702.

The first processing unit 701 is configured to: generate a first playing request by using a first application in response to a playing operation performed by a user in the first application on a first audio, where the first playing request carries first audio data of the first audio and a device identifier of a second electronic device; write the first audio data into a unique buffer address based on the first playing request by invoking a first audio framework; and read the first audio data from the unique buffer address, where the unique buffer address is a unique address buffered in a process of transmitting the first audio data from the first application to the second electronic device.

The first transceiver unit 702 is configured to send the first audio data to the second electronic device, for the second electronic device to play the first audio.

Optionally, before the first transceiver unit 702 sends the first audio data to the second electronic device, the first processing unit 701 is further configured to encode the first audio data to obtain encoded first audio data. The first transceiver unit 702 is specifically configured to send the encoded first audio data to the second electronic device.

Optionally, the first processing unit 701 is further configured to: generate a second playing request in response to a playing operation performed by the user in the first application on a second audio, where the second playing request carries second audio data of the second audio and a device identifier of the first electronic device; and output the second audio data to a first output device of the first electronic device through a first fast channel and an inter-kernel synchronization mechanism, to play the second audio.

Optionally, the first output device includes a loudspeaker.

Optionally, the inter-kernel synchronization mechanism includes a time sequence-based synchronization mechanism.

Optionally, the unique buffer address is located at the first audio framework or a first distributed hardware abstraction layer of the first electronic device.

Optionally, the first application includes an audio application.

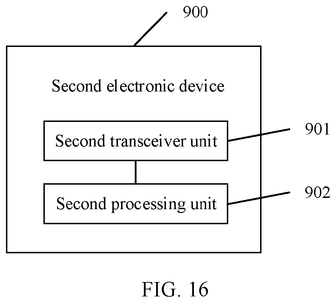

FIG. 16 is a diagram of a structure of a second electronic device according to an embodiment of the present invention. It should be understood that a second electronic device 800 can perform steps of the second electronic device in the foregoing audio playing method. To avoid repetition, details are not described herein again. The second electronic device 800 includes a second transceiver unit 801 and a second processing unit 802.

The second transceiver unit 801 is configured to receive first audio data sent by a first electronic device.

The second processing unit 802 is configured to output the first audio data to a second output device of the second electronic device through a second fast channel and an inter-kernel synchronization mechanism, to play the first audio.

Optionally, the second transceiver unit 801 is specifically configured to: receive encoded first audio data sent by the first electronic device, and decode the encoded first audio data, to obtain the first audio data.

Optionally, the inter-kernel synchronization mechanism includes a time sequence-based synchronization mechanism.

Optionally, the second output device includes a loudspeaker.

It should be understood that the first electronic device 700 and the second electronic device 800 herein are embodied in a form of functional units. The term "unit" herein may be implemented in a form of software and/or hardware. This is not specifically limited. For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the examples described in embodiments of the present invention can be implemented by using electronic hardware, or a combination of computer software and electronic hardware. Whether a function is performed by hardware or software depends on a particular application and a design constraint of the technical solutions. A person skilled in the art may use different methods to implement the described functions for each particular application, but it should not be considered that the implementation goes beyond the scope of the present invention.

An embodiment of this application provides an electronic device. The electronic device may be a terminal device or a circuit device built into the terminal device. The electronic device may be configured to perform functions/steps in the foregoing method embodiments.

An embodiment of this application provides a computer-readable storage medium. The computer-readable storage medium stores instructions. When the instructions are run on a terminal device, the terminal device is enabled to perform the functions/steps in the foregoing method embodiments.

An embodiment of this application further provides a computer program product including instructions. When the computer program product runs on a computer or any at least one processor, the computer is enabled to perform the functions/steps in the foregoing method embodiments.

In embodiments of this application, "at least one" refers to one or more, and "a plurality of" refers to two or more. The term "and/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these terms, including any combination of single or plural terms. For example, at least one of a, b, and c may represent: a, b, c, a and b, a and c, b and c, or a, b, and c, where a, b, and c may be one or more.

A person of ordinary skill in the art may be aware that the units and algorithm steps described in embodiments disclosed in this specification can be implemented by a combination of electronic hardware, computer software, and electronic hardware. Whether a function is performed by hardware or software depends on a particular application and a design constraint of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing an electronic device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope in embodiments of this application. Therefore, the protection scope of this application shall be subject to the protection scope of the claims.

## Claims

1. An audio playing system, wherein the system comprises:
a first electronic device, configured to: generate a first playing request by using a first application in response to a playing operation performed by a user in the first application on a first audio, wherein the first playing request carries first audio data of the first audio and a device identifier of a second electronic device; write the first audio data into a unique buffer address based on the first playing request by invoking a first audio framework; and read the first audio data from the unique buffer address, and send the first audio data to the second electronic device, wherein the unique buffer address is a unique address buffered in a process of transmitting the first audio data from the first application to the second electronic device; and
the second electronic device, configured to output the first audio data to a second output device of the second electronic device through a second fast channel and an inter-kernel synchronization mechanism, to play the first audio.

2. The system according to claim 1, wherein the first electronic device is further configured to: generate a second playing request in response to a playing operation performed by the user in the first application on a second audio, wherein the second playing request carries second audio data of the second audio and a device identifier of the first electronic device; and output the second audio data to a first output device of the first electronic device through a first fast channel and the inter-kernel synchronization mechanism, to play the second audio.

3. The system according to claim 1 or 2, wherein the inter-kernel synchronization mechanism comprises a time sequence-based synchronization mechanism.

4. The system according to any one of claims 1 to 3, wherein the unique buffer address is located at the first audio framework or a first distributed hardware abstraction layer of the first electronic device.

5. The system according to any one of claims 1 to 4, wherein the first application comprises an audio application.

6. An audio playing method, applied to a first electronic device, wherein the method comprises:
generating a first playing request by using a first application in response to a playing operation performed by a user in the first application on a first audio, wherein the first playing request carries first audio data of the first audio and a device identifier of a second electronic device;
writing the first audio data into a unique buffer address based on the first playing request by invoking a first audio framework; and
reading the first audio data from the unique buffer address, and sending the first audio data to the second electronic device, for the second electronic device to play the first audio, wherein
the unique buffer address is a unique address buffered in a process of transmitting the first audio data from the first application to the second electronic device.

7. The method according to claim 6, wherein before the sending the first audio data to the second electronic device, the method further comprises:
encoding the first audio data, to obtain encoded first audio data; and
the sending the first audio data to the second electronic device comprises:
sending the encoded first audio data to the second electronic device.

8. The method according to claim 6 or 7, wherein the method further comprises:
generating a second playing request in response to a playing operation performed by the user in the first application on a second audio, wherein the second playing request carries second audio data of the second audio and a device identifier of the first electronic device; and
outputting the second audio data to a first output device of the first electronic device through a first fast channel and an inter-kernel synchronization mechanism, to play the second audio.

9. The method according to claim 8, wherein the first output device comprises a loudspeaker.

10. The method according to claim 8 or 9, wherein the inter-kernel synchronization mechanism comprises a time sequence-based synchronization mechanism.

11. The method according to any one of claims 6 to 10, wherein the unique buffer address is located at the first audio framework or a first distributed hardware abstraction layer of the first electronic device.

12. The method according to any one of claims 6 to 11, wherein the first application comprises an audio application.

13. An audio playing method, applied to a second electronic device, wherein the method comprises:
receiving first audio data sent by a first electronic device; and
outputting the first audio data to a second output device of the second electronic device through a second fast channel and an inter-kernel synchronization mechanism, to play a first audio.

14. The method according to claim 13, wherein the receiving audio data sent by the first electronic device comprises:
receiving encoded first audio data sent by the first electronic device; and
decoding the encoded first audio data, to obtain the first audio data.

15. The method according to claim 13 or 14, wherein the inter-kernel synchronization mechanism comprises a time sequence-based synchronization mechanism.

16. The method according to any one of claims 13 to 15, wherein the second output device comprises a loudspeaker.

17. An electronic device, comprising a processor and a memory, wherein the memory is configured to store a computer program, the computer program comprises program instructions, and when the processor runs the program instructions, the electronic device is enabled to perform the steps of the method according to any one of claims 6 to 16.

18. A computer-readable storage medium, wherein the computer-readable storage medium stores a computer program, the computer program comprises program instructions, and when the program requests to be run by a computer, the computer is enabled to perform the method according to any one of claims 6 to 16.
